# EUROPEAN PATENT APPLICATION

(11) **EP 3 173 199 A1**
(43) Date of publication of application: **31.05.2017**
(21) Application number: 14897279.7
(22) Date of filing: 02.09.2014
(51) Int. Cl.: B26D 1/56, B23D 25/00, B26D 1/60

(54) **NOVEL METHOD AND DEVICE FOR ALTERNATELY CUTTING OFF MATERIALS BY BACK-AND-FORTH MOVEMENT OF MULTIPLE VEHICLES**

(30) Priority: 23.07.2014 CN 201410353425
(71) Applicant: Dalian Field Heavy-Machinery Manufacturing Co. Ltd, Tiexi Development District, Pulandian Dalian Liaoning 116200 (CN)
(72) Inventor: GAO, Guowu, Dalian, Liaoning 116200 (CN)
(74) Representative: Martegani, Franco
(86) International application number: PCT/CN2014/085702
(87) International publication number: WO 2016/004674

(57) **Abstract**

Disclosed are a method and device for alternately cutting off material by back-and-forth movement of multiple vehicles. The device is specifically a cut-off machine for alternately cutting off material by back-and-forth movement of multiple vehicles. The cut-off machine is at least provided with two cutter vehicles (1, 2), wherein these vehicles are installed on tracks (4) parallel to material; the tracks are arranged around the material (3) side by side; each vehicle moves back and forth in accordance with a set sequence; cutters (7, 9) on the vehicles alternately cut off the material in accordance by a set length; and the larger the number of vehicles is, the longer the stroke of each vehicle can be set, so that the cutters have more time to cut off the material, and therefore, the cut-off machine can be adapted to a higher material forming speed in a production line.

## Description

### FIELD

This application relates to a method for cutting off material by a set length in a production line field of a high-speed continuously formed material, and particularly to a novel method and device for alternately cutting off the material with multiple carriages reciprocating movement.

### BACKGROUND

A conventional cut-off machine in a production line of a high-speed continuously formed material is generally equipped with only one reciprocating carriage, and the carriage is equipped with a cutter. When the material travels a set length, the carriage starts from an original point and runs after the material, and when the speed of the carriage is equal to the speed of the material, the cutter on the carriage cuts off the material in a direction perpendicular to the material, then, the carriage returns to the original point for the next cutting. Since the process that the carriage returns to the original point wastes cutting time, the traveling distance of the carriage of this kind of cut-off machine cannot be long, otherwise, in the process that the carriage cuts off the material and returns to the original point, the length which the material travels may exceed the set length, thus the cut-off machine cannot perform a set length cutting. Since the traveling distance of the carriage is short, the time for cutting is short. When the production line forms the material at a high speed, the cut-off machine, in which the cutter does not have sufficient cutting time, or the cutter is damaged prematurely due to a forcible cutting, is not suitable for the production line for the high-speed continuously formed material.

### TECHNICAL ISSUE

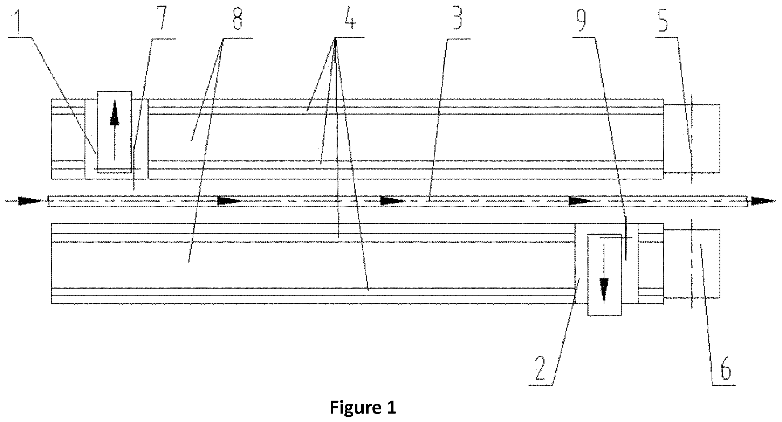

In order to overcome the defects in the conventional technology, a novel method and device for alternately cutting off a material with multiple carriages reciprocating movement are provided according to the present application. A cut-off machine for alternately cutting off the material with the multiple carriages reciprocating movement is adopted. The cut-off machine has at least two carriages equipped with a cutter respectively. These carriages are mounted on rails in parallel with the material, and these rails are arranged around the material side by side. The carriages reciprocate in a set sequence on their respective rails in parallel with the material by driving devices. The cutters on the carriages alternately cut off the material by a set length. For ease of description, the working process of the present application is described by taking a cut-off machine for alternately cutting off the material by double carriages reciprocating movement in (Figure 1) as an example.

A cut-off machine for alternately cutting off the material by double carriages reciprocating movement (see Figure 1):

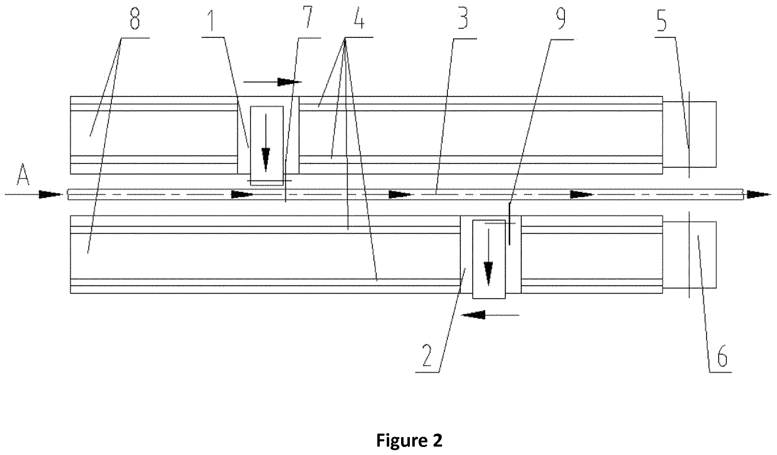

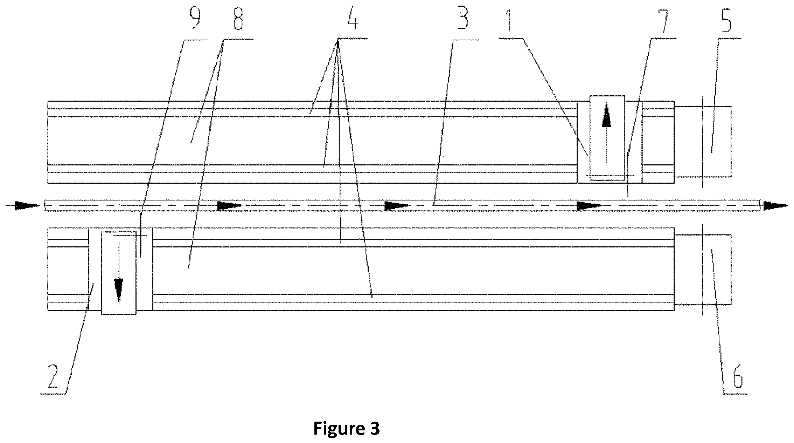

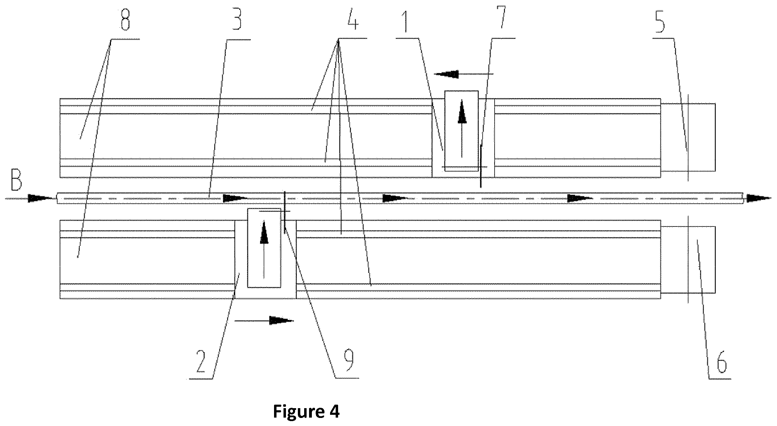

The cut-off machine has two carriages equipped with a cutter respectively. These carriages 1 and 2 are mounted on their respective rails in parallel with material, and these rails are arranged around the material side by side. The carriages 1 and 2 reciprocate in a set sequence by their respective driving devices 5 and 6. The carriage 1 is equipped with a cutter 7, and the carriage 2 is equipped with a cutter 9, and a fixing base 8 is provided below each of the rails 4. A working cycle of the cut-off machine is as follows. In a continuous forming process of a material 3, the carriage 1, which is stopped at the original point, begins to start up and is accelerated by the driving device 5 when the material 3 travel by a set length. When the speed of the carriage 1 is equal to the speed of the material 3, the cutter 7 on the carriage 1 cuts off the material 3 in a direction perpendicular to the material 3 (see Figure 2), and then stops at a terminal point. Meanwhile, the carriage 2 returns to the original point from the terminal point, and then stops (see Figure 3). When the material 3 travel the set length again, the carriage 2, which is stopped at the original point, begins to start and is accelerated by the driver 6. When the speed of the carriage 2 is equal to the speed of the material 3, the cutter 9 on the carriage 2 cuts off the material in the direction perpendicular to the material 3 (see Figure 4), and then stops at the terminal point. Meanwhile, the carriage 1 returns to the original point from the terminal point, and then stops (see Figure 1). As long as the material on the production line is formed continuously, the cut-off machine may ceaselessly repeat the above working cycle. As illustrated, in the cut-off machine for alternately cutting off material by double carriages reciprocating movement, the time for the carriage to return has not occupied the cutting time, thus, with this kind of cut-off machine, the carriage may have a long traveling distance (theoretically the traveling distance may reach a set length of material). Due to the long traveling distance, the cutter may have more time cut material, even if the forming of the material 3 accelerates, as long as the increased speed is within a certain limit, thus, the cutter may have sufficient time cut off the material. Therefore, the cut-off machine for alternately cutting off material by double carriages reciprocating movement can meet the requirement for cutting off material by a set length in a production line of high-speed forming material.

The cut-off machine for alternately cutting off material with multiple carriages reciprocating movement has the same working principle as the above cut-off machine for alternately cutting off material by double carriages reciprocating movement. The cut-off machine for alternately cutting off material with multiple carriages reciprocating movement has at least two carriages equipped with a cutter respectively, and these carriages are respectively mounted on rails in parallel with material, and these rails are arranged around the material side by side. The carriages reciprocate in a set sequence on their respective rails in parallel with the material by the driving devices, and the cutters on the carriages alternately cut off the material by a set length. The larger the number of carriages is, the longer the traveling distance of each carriage can be set, and the more time the cutters may have for cutting off the material, therefore, the higher the material forming speed of the cut-off machine in a production line can be. Theoretically, a distance of the cut-off machine may reach:

A maximum traveling distance = (the number of carraiges-1) x a set length of the material.

### BRIEF DESCRIPTION OF THE DRAWINGS

### DESCRIPTION OF THE DRAWINGS

(Figure 1) is a schematic view showing that a carriage 1 is at an original point and a carriage 2 is at a terminal point according to an embodiment of the present application;
(Figure 2) is a schematic view showing that the carriage 1 runs after a material and cuts the material point according to the embodiment of the present application;
(Figure 3) is a schematic view in which the carriage 2 showing that the carriage 2 is at the original point and the carriage 1 is at the terminal point according to the embodiment of the present application;
(Figure 4) is a schematic view showing that the carriage 2 runs after the material and cuts the material according to the embodiment of the present application;

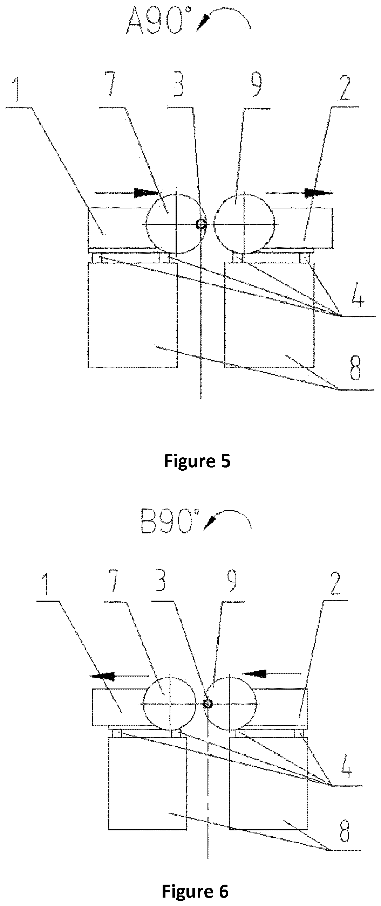

(Figure 5) is a side view of Figure 2; and
(Figure 6) is a side view of Figure 4.

### EMBODIMENTS OF THE APPLICATION

### DETAILED DESCRIPTION

An embodiment of the present application is further described hereinafter with reference to one of multiple forms of a cut-off machine for alternately cutting off a material with multiple carriages reciprocating movement, that is, a cut-off machine for alternately cutting off material by double carriages reciprocating movement. The cut-off machine for alternately cutting off material by double carriages reciprocating movement consists of a carriage 1 and a carriage 2, rails 4, bases 8, a driving device 5 and a driving device 6, and a cutter 7 and a cutter 9. The carriage 1 and the carriage 2 are both mounted on their respective rails in parallel with the material 3, the rails are arranged around the material side by side, and the carriage 1 and the carriage 2 reciprocate in a set sequence by the driving device 5 and the driving device 6 respectively. As shown in (Figure 1), the carriage 1 and the carriage 2 equipped with the cutters are mounted on rails in parallel with the material, and the carriage 1 is at an original point and the carriage 2 is at a terminal point. When the material 3 travels a set length, the driving device 5 starts and allows the carriage 1 to accelerate from the original point. When the speed of the carriage 1 is equal to the speed of the material 3, the cutter 7 on the carriage 1 begins to cut off the material 3 in a direction perpendicular to the material, see (Figure 2), and then stops at the terminal point. Meanwhile, the carriage 2 returns to the original point from the terminal point, and then stops, see (Figure 3). When the material 3 travels by the set length again, the driver 6 starts and allows the carriage 2 to accelerate from the original point. When the speed of the carriage 2 is equal to the speed of the material 3, the cutter 9 on the carriage 2 cuts off the material 3 in the direction perpendicular to the material, see (Figure 4), and then stops at the terminal point, and meanwhile, the carriage 1 returns to the original point from the terminal point and then stops, see (Figure 1). The cut-off machine repeats the above working cycle round and round and cuts off the material by the set length.

Similarly, the cut-off machine for alternately cutting off material with multiple carriages reciprocating movement has at least two carriages equipped with a cutter respectively. These carriages are respectively mounted on rails in parallel with the material, and these rails are arranged around the material side by side. Each of the carriages reciprocates in a set sequence, and the cutters on the carriages alternately cut off the material by a set length. The larger the number of the carriages is, the longer the traveling distance of each carriage can be set, and the more time the cutters may have for cutting off the material, and therefore, the higher the material forming speed in a production line to which the cut-off machine can be. Theoretically, a distance of the cut-off machine may reach:

A maximum traveling distance = (the number of carraiges-1) x a set length of material.

## Claims

1. A novel method for alternately cutting off a material by a set length by a plurality of carriages reciprocating movement in a production line field of a high-speed continuously formed material, wherein, at least two carriages equipped with a cutter respectively are provided, these carriages are mounted on their respective rails in parallel with the material, these rails are arranged around the material side by side, these carriages reciprocate in a set sequence on their respective rails by a driving device, and the cutters on the carriages alternately cut off the material by the set length, one working cycle according to the method, wherein double carriages are provided, is as follows:
- starting and accelerating a carriage 1 when the material 3 travels a set length,
- cutting off, by the cutter 7 on the carriage 1, the material 3 in a direction perpendicular to the material when the speed of the carriage 1 is equal to the speed of the material 3,
- stopping the carriage 1 at a terminal point after the cutter 7 cuts off the material 3, meanwhile, returning a carriage 2 to an original point from the terminal point and stopping the carriage 2,
- starting and accelerating the carriage 2 stopped at the original point when the material 3 travels the set length again,
- cutting off, by the cutter 9 on the carriage 2, the material 3 in the direction perpendicular to the material when the speed of the carriage 2 is equal to the speed of the material 3,
- stopping the carriage 2 at the terminal point after the cutter 9 cuts off the material 3, meanwhile, returning the carriage 1 to the original point from the terminal point and stopping the carriage 1,
- repeating the working cycle ceaselessly as the material is formed continuously,
wherein, in the case that the number of carriages is more than two, the working cycle follows the above principle, and the respective carriages starts, accelerates, and cuts off the material and returns according to a set sequence.

2. According to claim 1, wherein in a traveling direction of the material, the original point of the cutter on each carriage is located at a same location.

3. According to claim 1, wherein a maximum traveling distance of each carriage is the same.

4. According to claim 1, wherein the larger the number of carriages is, the longer the traveling distance of each carriage is, theoretically, the traveling distance of the carriage can reach:
a maximum traveling distance = (the number of carraiges-1) x a set length of material.
